# EUROPEAN PATENT APPLICATION

(11) **EP 4 635 730 A2**
(43) Date of publication of application: **22.10.2025**
(21) Application number: 25171395.4
(22) Date of filing: 17.04.2025
(51) Int. Cl.: B32B 5/18, C08G 18/10, C08G 18/24, C08G 18/48, C08G 18/50, C08G 18/76

(54) **A NEW FOAMED BASE FOR MULTI-USE SURFACES MADE IN ONE STEP FROM A NOVEL POLYURETHANE SYSTEM**

(30) Priority: 18.04.2024 US 202418639353
(71) Applicant: Stockmeier Urethanes USA, Inc, Clarksburg, WV 26301 (US)
(72) Inventor: CROCCO, Guy L., Winston-Salem, NC 27106 (US); ISING, Andreas Schulze, Sewickley, PA 15143 (US)
(74) Representative: Serjeants LLP

(57) **Abstract**

The invention relates to novel polyurethane prepolymer compositions, methods of preparing the compositions, and methods of applying the compositions in a single step, e.g., one pour, to form a foamed base mat (2) as a multi-use surface. The two-component system of the invention includes reacting diisocyanate selected from toluene diisocyanate, methylene diphenyl diisocyanate, and mixtures thereof, and polyol selected from diol, triol, quadrol and mixtures thereof, to form a polyurethane prepolymer component and reacting this component with aqueous sodium silicate.

## Description

### 1. Field of the Invention

The invention relates to novel polyurethane prepolymer compositions, methods of preparing the compositions, means of forming a reaction mixture of novel polyurethane prepolymers with liquid sodium silicate, and methods of applying the mixed components in a single step to form a foamed base mat as a multi-use surface.

### 2. Background

Sports surfaces, e.g., rubberized surfaces, such as playgrounds and running tracks are typically made in a multi-step, e.g., multi-pour, process that includes (i) a first pour over concrete or asphalt for forming and applying a first layer consisting of a polyurethane binder and a styrene-butadiene rubber (SBR) mixture, and (ii) a second pour over the first pour for forming and applying a second layer consisting of the polyurethane binder and SBR mixture. The first and second pours form the sports surface base having a final height of approximately 10 mm, e.g., 5 mm for the first layer and 5 mm for the second layer. Mixing and spreading each pour or layer of the polyurethane binder and SBR mixture is labor intensive and requires specialized equipment. The cure time for the polyurethane binder is dependent on atmospheric conditions. Cool temperatures and low humidity will retard the cure. Wet weather will cause additional delays to allow for drying. Additionally, a cure time is required between the first pour or layer and the second pour or layer each consisting of the polyurethane binder and SBR mixture. Therefore, the time required to install the rubberized sports surface can be as much as one week or more.

Thus, there is a need in the art for the invention that includes a single step (or pour) installation process that is impervious to atmospheric conditions and, additionally, eliminates the need for SBR rubber, to form a multi-use surface including, but not limited to, a sports surface. In this invention, a novel polyurethane prepolymer is reacted with liquid sodium silicate to form a foam composition that is applied to a surface prepared for the intended application, such as concrete or asphalt. The applied foam composition is allowed to cure in a relatively short period of time, e.g., overnight, independent of temperature and humidity. As a result of rising and curing, the installed foamed base mat has a desired height (or thickness) of 10 mm. The novel composition and method of application allows installation of the foamed base mat without (i) SBR rubber, (ii) multiple mixing and spreading steps, (iii) a prolonged curing period that is dependent on atmospheric conditions, (iv) intensive manual labor, and (v) specialized equipment.

### SUMMARY OF THE INVENTION

An aspect of the invention provides a foamed base mat composition that includes a polyurethane prepolymer, including a reaction product of diisocyanate and a polyol selected from diol, triol, quadrol and mixtures thereof, wherein the diisocyanate is selected from toluene diisocyanate, methylene diphenyl diisocyanate, and mixtures thereof; and an aqueous sodium silicate.

The composition can be absent of a rubber component.

In certain embodiments, the polyol is a diol that has a molecular weight from about 400 to about 6,000 grams/mole or from about 2,000 to about 4,000 grams/mole or a triol that has a molecular weight from about 400 to about 6,000 grams/mole or from about 3,000 to about 5,000 grams/mole. In certain other embodiments, the polyol is selected from mono-, di-, or triethylene or propylene glycol, and mixtures thereof.

In certain embodiments, the polyurethane prepolymer has an NCO concentration from about 3.3% to about 5.2% or from about 5.0% to about 12.5% or from about 18% to about 26%, or from about 3.3% to about 26%, or from about 3.3% to about 22% or 23%.

The polyurethane prepolymer can be reacted with a diol initiated with propylene glycol and having a molecular weight from about 400 to about 6,000 grams/mole, a triol initiated with glycerin and having a molecular weight from about 400 to about 6,000 grams/mole, or quadrol initiated from an amine and having a hydroxyl value of about 53 to about 800.

Another aspect of the invention provides a foamed base mat that includes a polyurethane prepolymer, including a reaction product of diisocyanate and polyol selected from diol, triol, quadrol and mixtures thereof, wherein the diisocyanate is selected from toluene diisocyanate, methylene diphenyl diisocyanate and mixtures thereof; and an aqueous sodium silicate, and wherein a foam layer of the foamed base mat has a height or thickness of about 10 mm.

The foamed base mat forms a multi-use surface useful for a wide variety of purposes, including but not limited to, a walkway or a sports surface, such as a playground surface and running track surface.

The ratio of the polyurethane prepolymer and the aqueous sodium silicate can be effective to control foaming to produce the height or thickness of the foam layer of about 10 mm.

In certain embodiments, the foamed base mat further includes a top layer including a rubber component and a polyurethane binder. The top layer can be applied to the upper or exterior surface of the foam layer of the foamed base mat, the foam layer optionally being a single pore foam layer. In other words, the foam layer can be formed in a single pour. In this case, the foamed base mat includes a foam layer that is formed as a foam composition, and a top layer or coating. The rubber component can include ethylene propylene diene monomer and styrene-butadiene rubber. The polyurethane binder can include prepolymers made from toluene diisocyanate, methylene diphenyl diisocyanate, and mixtures thereof and diols from about 2,000 to about 4,000 grams/mole molecular weight.

Another aspect of the invention provides a method of preparing a foamed base mat, including forming a foam composition that includes preparing a polyurethane prepolymer, including reacting a diisocyanate and a polyol selected from diol, triol, quadrol and mixtures thereof, wherein the diisocyanate is selected from toluene diisocyanate, methylene diphenyl diisocyanate, and mixtures thereof; and reacting an aqueous sodium silicate with the polyurethane prepolymer.

The method can further include applying the foam composition on a surface to be treated to provide an applied foam composition; curing the applied foam composition; and forming a foam layer of the foamed base mat.

In certain embodiments, the applied foam composition has a height or thickness of about 2 mm.

In certain embodiments, the foam base has a height or thickness of about 10 mm.

In certain embodiments, the foam base has a density of about 0.29 g/cc.

In certain embodiments, the foam base has a Shore A hardness from about 41 to about 45.

### BRIEF DESCRIPTION OF THE DRAWINGS

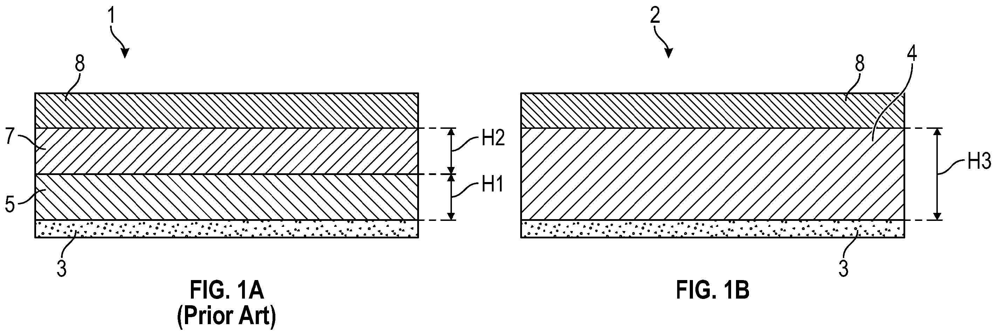

FIG. 1A is a schematic that illustrates a prior art (rubberized) base mat formed and applied by a prior art two-step (two-pour) process.
FIG. 1B is a schematic that illustrates a foamed base mat according to certain embodiments of the invention that is formed by a single-step (single-pour) process.

### DETAILED DESCRIPTION OF PREFERRED EMBODIMENTS

The invention relates to a novel two-component system and single-step (e.g., single-pour) method of applying the system to form a foamed base mat that is a multi-use surface useful for various applications, such as, but not limited to, walkways and sports surfaces. One component of the system includes a novel polyurethane prepolymer, and the other component includes sodium silicate in the form of a liquid. The two components are combined to form a foam composition, which is then applied to a surface that is to be treated. The surface material may vary and in certain embodiments is an asphalt or concrete surface. Reaction of the novel polyurethane prepolymer and liquid sodium silicate provides controlled foaming to achieve a desired height or thickness (e.g., about 10 mm) in a single step, e.g., one pour. The application process includes spreading the foam composition onto the surface to be treated to form a single layer. In certain embodiments, the foam composition layer as applied has a desired height or thickness of about 1-2 mm. The foam composition is then allowed to rise and cure with atmospheric conditions. Upon curing and controlled foaming reaction (of the sodium silicate), the resulting, e.g., set, foam layer of the foamed base mat is formed. In certain embodiments, following curing, foaming, and setting, the foam layer of the foamed base mat has a desired height or thickness of about 10 mm. In certain embodiments, the height or thickness of the foam layer of the foamed base mat is increased or decreased by decreasing or increasing, respectively, the amount of the liquid sodium silicate, as well as increasing or decreasing, respectively, the height or thickness of the applied foam composition layer (i.e., prior to rising and curing).

Installation of the foamed base mat provides a softer layer over a harder surface. Thus, the foamed base mat is particularly useful wherein transforming a hard surface into a softer surface is desirable, such as, for safety and performance concerns. In certain embodiments, the foamed base mat is used to form a playground surface or a running track surface.

In accordance with the invention, application, e.g., spreading, of the foam composition to form the foamed base mat is a single- (one-pour) process. As previously disclosed, it is typical for a prior art rubberized base mat, e.g., sports surface, having a height or thickness of about 10 mm, to be produced by a multi-step (two-pour) process that includes (i) a first pour over concrete or asphalt for forming and applying a first layer consisting of a polyurethane binder and a styrene-butadiene rubber (SBR) mixture, and (ii) a second pour over the first pour for forming and applying a second layer consisting of the polyurethane binder and SBR mixture, wherein the first and second pours form the base mat having a final height of approximately 10 mm, e.g., 5 mm for the first layer and 5 mm for the second layer. Mixing and spreading each pour or layer of the polyurethane binder and SBR mixture is labor intensive and requires specialized equipment. The cure time for the polyurethane binder is dependent on atmospheric conditions, e.g., cures with the presence of moisture or humidity. Cool temperatures and low humidity will retard the cure. Wet weather will cause additional delays to allow for drying. Additionally, a cure time is required between the first pour or layer and the second pour or layer each consisting of the polyurethane binder and SBR mixture. Therefore, the time required to install the rubberized surface can be as much as one week or more.

FIG. 1A is a schematic that illustrates a prior art (rubberized) base mat 1 that is formed and applied to a concrete or asphalt surface **3** by a prior art two-step (two-pour) process. FIG. 1B is a foamed base mat **2** according to certain embodiments of the invention that is formed and applied to the concrete or asphalt surface **3** by a single-step (single-pour) process. The base mat **1** has a first pour layer **5** that is applied to the concrete or asphalt surface **3,** and second pour layer **7** that is applied to the first pour layer **5.** In certain embodiments, each of the first pour and second pour layers **5,7** has a height **H1** and **H2,** respectively, of about 5 mm. The foamed base mat **2** has a single pore foam layer **4** that is applied to the concrete or asphalt surface **3.** In certain embodiments, the single pour foam layer **4** has a height **H3** of about 10 mm. Additionally, each of the base mat **1** and the foamed base mat **2** has a top coating or layer **8** applied to the upper or exterior surface of the second pore layer **7** and the single pore foam layer **4,** respectively. In certain embodiments, the composition of the top coating or layer **8** includes EPDM and binder. Further, in certain embodiments, the base mats **1** and **2** are used for a running track system.

Whereas, in the inventive two-component system the polyurethane prepolymer is combined with the liquid sodium silicate, and dispensed in one spreading step with equipment that is commonly used in the polyurethane industry. Accordingly, there are at last the following advantages to the inventive system:
1. The foamed base mat does not contain SBR or other rubber products and therefore, eliminates excessive labor and the environmental impact of making, processing, and shipping SBR. Accordingly, in certain embodiments of the invention, the inventive foamed base mat is rubber-free.
2. Only one application (a single-step or one-pour) of the two-component system is required to attain a desired height or thickness (e.g., about 10 mm) and the foam rises and cures within about 12 to about 24 hours following application, e.g., overnight, which significantly reduces the overall installation time of the foamed base mat (as compared to a prior art rubberized mat that is spread and applied using a multi-step or two-pour process).
3. The foaming reaction is controlled by the liquid sodium silicate and eliminates the effect of CO₂ generation from the reaction of isocyanate with atmospheric moisture.
4. The foaming reaction is unaffected by moisture on the surface and eliminates the need to wait for the surface to dry.

The polyurethane prepolymer component (of the two-component system) includes an intermediate toluene diisocyanate (TDI) prepolymer, an intermediate methylene diphenyl diisocyanate (MDI) prepolymer, or a mixture thereof. The TDI prepolymer is formed by reacting TDI with a polyol selected from diol, triol, quadrol and mixtures thereof, and the MDI prepolymer is formed by reacting MDI with a polyol selected from diol, triol, quadrol and mixtures thereof. Suitable diols include, but are not limited to, diols having a molecular weight from about 400 to about 6,000 grams/mole or from about 2,000 to about 4,000 grams/mole. Suitable triols include, but are not limited to, triols having a molecular weight from about 400 to about 6,000 grams/mole or from about 3,000 to about 5,000 grams/mole. In certain other embodiments, the polyol is selected from mono-, di-, or tri- ethylene or propylene glycol, and mixtures thereof. In certain embodiments, the polyol is one or more short-chain diols such as dipropylene glycol. In certain other embodiments, the polyol is an amine started polyol with ethylene and/or propylene oxide.

In certain embodiments, the polyurethane prepolymer has an NCO concentration from about 3.3% to about 5.2% or from about 5.0% to about 12.5% or from about 18% to about 22%, or from about 3.3% to about 22% or about 3.3% to about 23% or about 3.3% to about 26%, or combinations of the ranges. In certain embodiments, the TDI prepolymer has an NCO concentration from about 3.3% to about 5.2%, and the MDI prepolymer has an NCO concentration from about 18% to about 22% or 23%.

In certain embodiments, one or more polyols are added to the polyurethane prepolymer components to form a final prepolymer. Suitable polyols include polyether and polyester diols, and polyether triols and quadrols such as, but not limited to, polyether polyols that are available commercially as Multranol 9168 and Carpol GP-5171.

In certain embodiments, one or more of a plasticizer and a catalyst is added to the polyurethane prepolymer component. Suitable plasticizers include those that are known in the art, such as, but are not limited to, 2,2,4-trimethyl-1,3-pentanediol diisobutyrate (TXIB). The addition of TXIB is effective to reduce the viscosity of the polyurethane prepolymer, e.g., to about 4,000 cps. Suitable catalysts include those that are known in the art, such as, but are not limited to, dibutyltin dilaurate. The addition of dibutyltin dilaurate to the polyurethane prepolymer component is effective to accelerate the gel reaction in the subsequent foaming reaction.

In certain embodiments, the intermediate TDI prepolymer is prepared by reacting toluene diisocyanate (80% 2,4- / 20% 2,6-isomer), commercially available as Lupranate or Desmodur T80, with a 2,000 molecular weight diol to 3.9% NCO. In certain other embodiments, the toluene diisocyanate is reacted with a 4,000 molecular weight diol, and/or the NCO concentration is higher, e.g., 5.2% NCO, or lower, e.g., 3.3% NCO.

In certain embodiments, the intermediate MDI prepolymer is prepared by reacting 4,4'-MDI (methylene diphenyl diisocyanate) with dipropylene glycol to 22.0% NCO, and further modifying with additional MDI and TXIB to a 23.3% NCO. In certain other embodiments, the MDI prepolymer is prepared by reacting 4, 4'-MDI with dipropylene glycol and a 4,000 molecular weight diol to 22.9% NCO.

In certain embodiments, the TDI and MDI prepolymer components are reacted with one or more polyester or polyether diols, triols, and quadrols and further treated with plasticizer and catalyst to form the final prepolymer component. The polyurethane prepolymer can be reacted with a diol initiated with propylene glycol and having a molecular weight from about 400 to about 6,000 grams/mole or a triol initiated with glycerin and having a molecular weight from about 400 to about 6,000 grams/mole or a quadrol initiated from an amine and having a hydroxyl value of about 53 to about 800. In certain embodiments, the final prepolymer component has an NCO of about 7.8%. In certain embodiments, the NCO is from about 5.0 to about 12.5%. The final polyurethane prepolymer component is then reacted with the liquid sodium silicate component (of the two-component system) to form a foam composition that is applied, e.g., spread, on a surface, such as, asphalt or concrete. The applied material is then foamed to a desired height or thickness, e.g., about 10 mm, and cured to form the foam layer of the foamed base mat. In certain embodiments the foam composition is applied, e.g., spread, to an initial height or thickness of about 1-2 mm, and then rises to the final height or thickness of about 10 mm (during curing and controlled foaming) due to expansion by the CO₂ gas that is not captured by the sodium silicate.

In certain embodiments, the sodium silicate component includes aqueous sodium silicate, such as, a solution of soda and silica in water at a ratio that controls the foaming process to produce the desired height or thickness of the installed foamed base mat. Without intending to be bound by any particular theory, it is believed that the water reacts with the NCO groups in the novel polyurethane prepolymer generating CO₂ gas to initiate the blowing process. To control the final density of the foam, a portion (e.g., majority or most) of the CO₂ gas is captured by the sodium silicate to form polysiloxane, which becomes an integral part of the final foamed base mat. The use of aqueous sodium silicate negates any effect from atmospheric humidity that is capable of accelerating the foaming reaction by generating additional CO₂ gas and consequently altering the foam properties, e.g., density.

In certain embodiments, following the cure, e.g., overnight, the foam base of the foamed base mat has a density of about 0.29 g/cc (1.8 pounds/cubic foot); additionally, in certain embodiments, the Shore A hardness is from about 41 to about 45.

Optionally, an additional topcoat or layer including a rubber component and polyurethane binder is applied to the upper or exterior surface of the installed foam layer of the foamed base mat to provide the final, e.g., exterior, surface. In certain embodiments, the rubber component comprises ethylene propylene diene monomer (EPDM) rubber. In certain embodiments, the polyurethane binder includes an MDI prepolymer and a polyol, such as but not limited to, an about 2,000 to about 4,000 molecular weight diol or an about 3,000 to about 5,000 molecular weight triol. The prepolymer NCO range can vary and in certain embodiments is from 8% to 11%. The top layer provides improved wear resistance, high energy return, and allows for custom colors of the multi-use surface.

Whereas particular embodiments of the invention have been described herein for purposes of illustration, it will be evident to those skilled in the art that numerous variations of the details may be made without departing from the invention as set forth in the appended claims.

### EXAMPLES

### Material Preparation

A TDI Prepolymer 1 was made by reacting TDI T80 (toluene diisocyanate, 80% 2,4- / 20% 2,6-isomer) with a 2,000 molecular weight diol to 3.9% NCO. A TDI Prepolymer 2 was made by reacting TDI T80 (toluene diisocyanate, 80% 2,4- / 20% 2,6-isomer) with a 2,000 molecular weight diol to 5.2% NCO. A TDI Prepolymer 3 was made by reacting TDI T80 (toluene diisocyanate, 80% 2,4- / 20% 2,6-isomer) with a 4,000 molecular weight diol to 3.3% NCO.

An MDI Prepolymer 1 was made by reacting 4,4'-MDI (methylene diphenyl diisocyanate) with dipropylene glycol to 22.0% NCO, and further modified with additional MDI and TXIB (2,2,4-trimethyl-1,3-pentanediol diisobutyrate) to 23.3% NCO. An MDI Prepolymer 2 was made by reacting 4,4'-MDI with dipropylene glycol and a 4000 molecular weight diol to 22.9% NCO.

### Example 1

The TDI Prepolymer 1 (500 g), the MDI Prepolymer 1 (299.9 g), Multranol 9168 (100 g), TXIB (100g) and dibutyltin dilaurate (0.1 g) were reacted to provide a product with 8.2% NCO. The resulting prepolymer was reacted with sodium silicate D (PQ Corporation) at 100:4 wt.% and spread into a 30 x 30 cm mold at 1mm liquid thickness. The material foamed to a height of 10.8 mm.

### Example 2

The TDI Prepolymer 1 (500 g), the MDI Prepolymer 1 (379.9 g), Carpol GP-5171 (30 g), Multranol 9168 (90 g), and dibutyltin dilaurate (0.1 g) were reacted to provide a product with 8.3% NCO. The resulting prepolymer was reacted with sodium silicate D (PQ Corporation) at 100:5 wt.% and spread into a 30 x 30 cm mold at 1 mm liquid thickness. The material foamed to a height of 10.4 mm.

### Example 3

The TDI Prepolymer 2 (550 g), the MDI Prepolymer 1 (329.9 g), Carpol GP-5171 (30 g), Multranol 9168 (90 g), and dibutyltin dilaurate (0.1 g) were reacted to provide a product with 9.7% NCO. The resulting prepolymer was reacted with sodium silicate D (PQ Corporation) at 100:5 wt.% and spread into a 30 x 30 cm mold at 1 mm liquid thickness. The material foamed to a height of 10.0 mm.

### Example 4

The TDI Prepolymer 1 (500 g), the MDI Prepolymer 2 (379.9 g), Carpol GP-5171 (30 g), Multranol 9168 (90 g), and dibutyltin dilaurate (0.1 g) were reacted to provide a product with 10.1% NCO. The resulting prepolymer was reacted with sodium silicate D (PQ Corporation) at 100:5 wt.% and spread into a 30 x 30 cm mold at 1 mm liquid thickness. The material foamed to a height of 10.5 mm.

### Example 5

The TDI Prepolymer 1 (470 g), the MDI Prepolymer 1 (329.9 g), Multranol 9168 (130 g), TXIB (70 g) and dibutyltin dilaurate (0.1 g) were reacted to provide a product with 8.4% NCO. The resulting prepolymer was reacted with sodium silicate D (PQ Corporation) at 100:4.4 wt.% and spread into a 30 x 30 cm mold at 1 mm liquid thickness. The material foamed to a height of 10.7 mm.

### Example 6

The TDI Prepolymer 1 (520 g), the MDI Prepolymer 1 (299.8 g), Multranol 9168 (110 g), TXIB (70 g) and dibutyltin dilaurate (0.2 g) were reacted to provide a product with 8.0% NCO. The resulting prepolymer was reacted with sodium silicate D (PQ Corporation) at 100:4.4 wt.% and spread into a 30 x 30 cm mold at 1 mm liquid thickness. The material foamed to a height of 10.5 mm.

### Example 7

The TDI Prepolymer 1 (460 g), the MDI Prepolymer 1 (339.8 g), Carpol GP-5015, and dibutyltin dilaurate (0.2 g) were reacted to give a product with 8.3% NCO. The resulting prepolymer was reacted with sodium silicate D (PQ Corporation) at 100:4.4 wt.% and spread into a 30 x 30 cm mold at 1 mm liquid thickness. The material foamed to a height of 10.8 mm.

### Example 8

The TDI Prepolymer 1 (429.8 g), the MDI Prepolymer 2 (450 g), Carpol GP-5171 (30 g), Multranol 9168 (90 g) and dibutyltin dilaurate (0.2 g) were reacted to provide a product with 11.4% NCO. The resulting prepolymer was reacted with sodium silicate D (PQ Corporation) at 100:5.7 wt.% and spread into a 30 x 30 cm mold at 1 mm liquid thickness. The material foamed to a height of 11.1 mm.

### Example 9

The TDI Prepolymer 1 (470 g), the MDI Prepolymer (32.98 g), Carpol PGP-4025 (30 g), Multranol 9168 (100 g), TXIB (70 g) and dibutyltin dilaurate (0.02 g) were reacted to provide a product with 8.9% NCO. The resulting prepolymer was reacted with sodium silicate D (PQ corporation) at 100:4.5 and spread into a 30 x 30 cm mold at 1 mm liquid thickness. The material foamed to a height of 10.8 mm.

### Example 10 - Top (Outer) Layer

Stobielast S 154 (114 g poly + 70 g iso) was mixed and then spread on the foamed base mat contained in a 30 x 30 cm mold prepared according to Examples 1-10. EPDM granules were broadcast on the liquid surface of each of the foamed base mats and they were allowed to cure overnight. The excess EPDM was removed and the foamed base mat, with the top (outer) layer, was allowed to cure for 7 days. The cured, foamed base mats with and without top layer were then tested.

The properties of the foamed base mats are illustrated in Table 1 below, including the density, tensile strength and maximum elongation of the foamed base mats, as well as the force reduction for each of the foamed base mats with and without the top (outer) layer.

**Table 1. Foamed Base Mat Properties**

| **Example** | **1** | **2** | **3** | **4** | **5** | **6** | **7** | **8** | **9** |
|---|---|---|---|---|---|---|---|---|---|
| Density (lbs/ft³) | 2.1 | 1.9 | 2.1 | 1.8 | 2.0 | 2.0 | 2.0 | 1.9 | 2.2 |
| Tensile strength (psi) | 145 | 129 | 155 | 121 | 143 | 145 | 147 | 130 | 151 |
| Maximum elongation (%) | 136 | 114 | 140 | 112 | 138 | 136 | 141 | 114 | 129 |
| Force reduction (%,base mat only) | 43.9 | ND | 39.9 | ND | ND | 43.9 | 46.6 | ND | ND |
| Force reduction (%,with top layer) | 39.3 | ND | 36.1 | ND | ND | 39.3 | 43.6 | ND | ND |

### Example 11

A polyurethane prepolymer was made by reacting TDI (toluene diisocyanate) with a 2,000 molecular weight polyol to 3.9% NCO. A second prepolymer was made by reacting 4,4'-MDI (methylene diphenyl diisocyanate) with dipropylene glycol to 22% NCO and 2,000 cps (25°C), and further modified with additional MDI and TXIB (2,2,4-trimethyl-1,3-pentanediol diisobutyrate) to reduce the viscosity to 700 cps (25°C). The two prepolymers were reacted with a 5,000 molecular weight triol to 10% NCO. Dibutyltin dilaurate was added to accelerate the gel reaction in the subsequent foaming reaction.

The resulting prepolymer was mixed with aqueous sodium silicate, which was a solution of sodium and silica in water from PQ Corporation, at a ratio to control the foaming process. The water reacted with the NCO groups in the prepolymer to generate CO₂ to initiate the blowing process.

The liquid mixture was spread to an initial height of 2 mm and then raised to a final height of 10 mm. After curing overnight, the foam base mat had a density of 0.29 g/cc (1.8 pounds/cubic foot). The Shore A hardness was 41 - 45.

**Table 2. Prepolymer Formulation for Foamed Base Mat and Properties**

| **Raw Material** | **%** |
|---|---|
| **TDI prepolymer** | 47 |
| **MDI prepolymer** | 32.99 |
| **Polyol (5,000 MW)** | 10 |
| **TXIB** | 10 |
| **DBTDL** | .01 |
| **Viscosity @ 25°C (cps)** | 3,800 |
| **NCO (%)** | 9.8 |

**Table 3. Reaction with Sodium Silicate and Foam Properties**

| | |
|---|---|
| **Mixing ratio, prepolymer/sodium silicate (wt.%)** | **100:5** |
| **Tensile strength (psi)** | 145 |
| **Maximum elongation** | 136 |
| **Force reduction (base mat only)** | 43.9 |
| **Force reduction (with top layer)** | 39.3 |

## Claims

1. A foamed base mat composition, comprising:
a polyurethane prepolymer, comprising:
a reaction product of diisocyanate and a polyol selected from diol, triol, quadrol and mixtures thereof,
wherein the diisocyanate is selected from toluene diisocyanate, methylene diphenyl diisocyanate, and mixtures thereof; and
an aqueous sodium silicate.

2. A composition according to claim 1, wherein said composition is absent of a rubber component.

3. A composition according to claim 1 or claim 2, wherein the polyol is selected from a diol having a molecular weight from about 400 to about 6,000 grams/mole or from about 2,000 to about 4,000 grams/mole and a triol having a molecular weight from about 400 to about 6,000 grams/mole or from about 3,000 to about 5,000 grams/mole.

4. A composition according to any preceding claim, wherein the polyol is selected from mono-, di-, or tri- ethylene or propylene glycol, and mixtures thereof.

5. A composition according to any preceding claim, wherein the polyol is one or more short-chain diols such as dipropylene glycol.

6. A composition according to any preceding claim, wherein the polyurethane prepolymer has an NCO concentration from about 3.3% to about 5.2% or from about 5.0% to about 12.5% or from about 18% to about 26%, or from about 3.3% to about 22%, or from about 3.3% to about 23%, or from about 3.3% to about 26%.

7. A composition according to any preceding claim, wherein the polyurethane prepolymers are reacted with a polyether or polyester diol triol, or quadrol.

8. A foamed base mat (2), comprising:
a polyurethane prepolymer, comprising:
a reaction product of diisocyanate and polyol selected from diol, triol, quadrol and mixtures thereof,
wherein the diisocyanate is selected from toluene diisocyanate, methylene diphenyl diisocyanate and mixtures thereof; and
an aqueous sodium silicate, and
wherein a foam layer (4) of the foamed base mat (2) has a height of about 10 mm.

9. A foamed base mat (2) according to claim 8, wherein said foamed base mat (2) forms a multi-use surface, the multi-use surface optionally being selected from the group consisting of a walkway, sports surface, playground surface and running track surface.

10. A foamed base mat (2) according to claim 8 or claim 9, wherein the ratio of the polyurethane prepolymer and the aqueous sodium silicate is effective to control foaming to produce the height of the foam layer (10) to about 10 mm.

11. A foamed base mat (2) according to any of claims 8 to 10, further comprising a top layer (8) applied to the upper or exterior surface of the foam layer (4), the top layer (8) comprising a rubber component and a polyurethane binder, the rubber component optionally comprising ethylene propylene diene monomer rubber.

12. A method of preparing a foamed base mat (2), comprising:
forming a foam composition, comprising:
preparing a polyurethane prepolymer, comprising:
reacting a diisocyanate and a polyol selected from diol, triol, quadrol and mixtures thereof,
wherein the diisocyanate is selected from toluene diisocyanate, methylene diphenyl diisocyanate, and mixtures thereof; and
reacting an aqueous sodium silicate with the polyurethane prepolymer.

13. A method according to claim 12, further comprising:
applying the foam composition on a surface (3) to be treated to provide an applied foam composition;
curing the applied foam composition; and
forming a foam layer (4) of the foamed base mat (2).

14. A method according to claim 13, wherein the applied foam composition has a height of about 1 mm and/or the foam layer (4) has a height of about 10 mm.

15. A method according to any of claims 12 to 14, wherein the foam layer (4) has a density of about 0.29 g/cc and/or a Shore A hardness from about 41 to about 45.
